# EUROPEAN PATENT SPECIFICATION

(11) **EP 4 534 995 B1**
(45) Date of publication and mention of the grant of the patent: **09.12.2026**
(21) Application number: 25151578.9
(22) Date of filing: 21.09.2018
(51) Int. Cl.: G01N 30/44

(54) **CHROMATOGRAPHY APPARATUS**
CHROMATOGRAPHIEVORRICHTUNG
APPAREIL DE CHROMATOGRAPHIE

(30) Priority: 22.09.2017 GB 201715403
(43) Date of publication of application: 09.04.2025
(62) Document number(s) of the earlier application(s) in accordance with Art. 76 EPC: 18779604.0 / 3 685 156
(73) Proprietor: Cytiva Sweden AB, 751 84 Uppsala (SE)
(72) Inventor: STAFSTRÖM, Nils, 751 84 Uppsala (SE); HARELAND, Yngve, 751 84 Uppsala (SE); FRANCOIS, Tim, 751 84 Uppsala (SE); JÖNSSON, Anita, 751 84 Uppsala (SE); CHENG, Jeanne, 751 84 Uppsala (SE); ANDERSSON, Anna, 751 84 Uppsala (SE); ROSENGREN, Lars, 751 84 Uppsala (SE); ERICKSON, Kerstin, 751 84 Uppsala (SE); ÅGREN, Tomas Yngve, 751 84 Uppsala (SE)
(74) Representative: Wu, Ping

(56) References cited:
- WO-A1-2008/156484
- WO-A1-2010/144037
- WO-A1-2013/028828
- WO-A1-2015/121425
- WO-A1-2016/096790
- WO-A2-2007/045491
- US-A1- 2012 125 440
- US-A1- 2017 107 476

## Description

### TECHNICAL FIELD

The present invention relates to liquid chromatography apparatus, in particular but not exclusively to a laboratory or 'benchtop' size instrument of a versatile nature allowing convenient reconfiguration for different chromatographic procedures and convenient automated use. The invention extends to methods for operating such instruments.

### BACKGROUND

Liquid chromatography is a well-known procedure for separating mixtures of molecules, for example separating proteins in liquid samples. The proteins may typically be suspended in a fluid, and driven through a chromatography separation medium along with a buffer solution. The various sample molecules of the mixture travel at different speeds through a chromatography medium, causing them to separate. This separation may be completed by a fractionation step where the mobile phase may be directed to different containers, e.g. by an outlet valve of the chromatography apparatus.

In some applications, e.g. in the biopharmaceutical field, recent advancements in genetic engineering and cell culture technology have driven expression levels higher than ever, putting a considerable burden on down-stream purification, especially the fractionation step. While the introduction of new chromatography media compositions significantly improves the efficiency of a process based on a conventional fixed bed chromatography, additional gains can be achieved by operating in a continuous manner. The latter is especially appealing when continuous bioreactors, such as those operated in perfusion mode, are employed.

In continuous chromatography, two or more identical columns are connected in an arrangement that allows columns to be operated in series and/or in parallel, depending on the method requirements. Thus, all columns can be run in principle simultaneously, but in different stages. The procedure may be repeated, such that each column is loaded/packed, eluted, and regenerated several times in the process. Compared to 'conventional' chromatography, wherein a single chromatography cycle is based on several consecutive steps, such as loading, wash, elution and regeneration, in continuous chromatography based on multiple identical columns all these steps occur simultaneously but on different columns. Continuous chromatography operation results in a better utilization of chromatography media compositions, reduced processing time and reduced buffer fluid requirements, all of which benefits process economy. Continuous chromatography is sometimes denoted simulated moving bed (SMB) chromatography.

As previously mentioned each column may be loaded/packed, eluted, cleaned, and regenerated several times in the process. An essential factor for a reliable continuous chromatography process is the quality of the columns used, and more specifically the similarity or even density of media in each column. If the columns are not identical, the theoretical calculations will not be correct, and it will become difficult to design an efficient and robust continuous chromatography process. However, the loading/packing of a column with chromatography media composition, is very complex in order to obtain repeatable results. Even small differences in the number of plates or other packing properties can have a huge effect on the end result.

A problem with conventional solutions is that performing continuous chromatography is a cumbersome, complex and time consuming operation. Often the process must be interrupted to perform reconnection of fluid couplings/tubes, to perform packing of columns or to load a prepacked column, to perform cleaning operations etc.

Thus, there is a need for an improved chromatography apparatus for performing continuous chromatography.

Furthermore, even though chromatography apparatus which performs continuous chromatography of the type mentioned above are known, for example those sold under the tradename of ÄKTApilot by GE Healthcare, and these known instruments function well, providing a versatile instrument which can be re-plumbed for different functionality if needed, these instruments lack some functionality, such that there are only certain procedures in which they can be employed, and an extension of that versatility would be commercially attractive, but is not easy to achieve with the competing restraints of instrument size, maintaining versatility, practical aspects such as ease of cleaning internally and externally, and cost. Modular chromatographic systems which are controlled by a controller are known in the prior art. For example,

WO-A12008/156484 discloses a chromatography system comprising a plurality of modules including at least one pump and a column valve unit connectable to plural chromatography columns; and a controller, the controller being operable to control the system modules by activating the column valve unit.

### SUMMARY OF THE INVENTION

Embodiments of the present invention address the problems mentioned above. Thereby, an object of the present invention is to provide a chromatography instrument with one or more of: an increased functionality, for example able to operate in conventional batch chromatography as well as continuous chromatography; is useable across a wider range of applications; does not have a substantially increased overall size or manufacturing cost; and is simple to operate.

Good Manufacturing Practice (GMP) sets out guidelines for bioprocessing procedures, which if followed require cleanliness standards. Advantageously, the standards are easier to achieve with the proposed apparatus, for example where fluid paths in the instrument have, in one configuration at least, a continuous flow path with no substantive stagnant portions, thereby providing complete cleaning without the need to break down the fluid conduits. Embodiments of the proposed instrument provide a sanitary small-scale chromatography instrument suitable for both GMP and non-GMP work. Functionally wide flow and pressure ranges of the instrument makes it fit for both production of technical batches and scale-up studies as well as small-scale production of GMP-grade material. The high accuracy and flow range of the pumps enables precise gradient formation, covering a large range of chromatography column sizes and more repeatable results.

In embodiments, a modular construction provides increased functionality, for different uses. Interactive control software allows changes to be made in real-time and unexpected deviations to be quickly identified. The small, bench-top size frees up lab space. The instrument allows in-situ column packaging, i.e. the ability to compress chromatography media in the column, or each column where two or more columns are used, whilst being connected to the instrument, and without having to then disconnect any fluid conduits prior to performing chromatographic procedures.

There is provided a chromatography instrument as claimed in independent system claim 1.

More advantages and benefits of the present invention will become readily apparent to the person skilled in the art in view of the detailed description below.

### DRAWINGS

The invention will now be described in more detail with reference to the appended drawings, wherein:
- Figure 1: shows a pictorial view of a new chromatography apparatus;
- Figure 2: shows shematic representation of the apparatus shown in Figure 1; and
- Figures 3,4 and 5: show configurations of the apparatus shown in the previous Figures.

### DETAILED DESCRIPTION

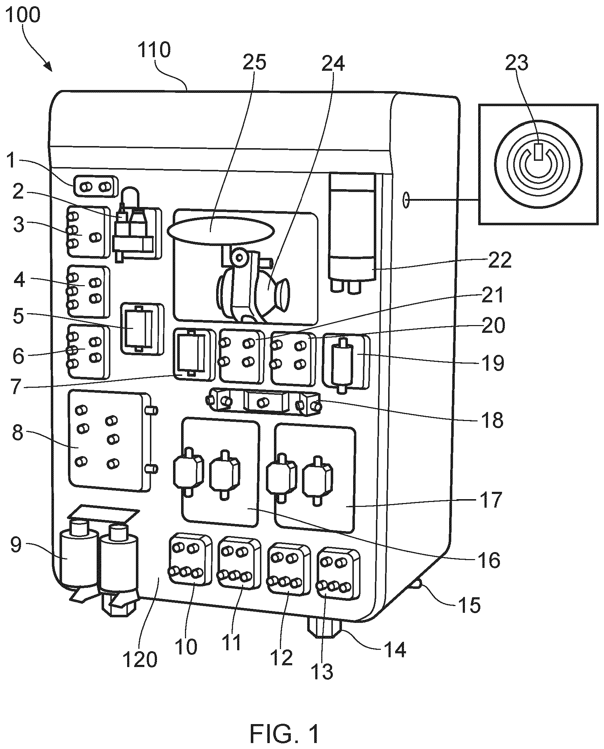

Fig 1 sows a chromatography apparatus 100 according to an aspect of the invention. The apparatus includes, but it not limited to, individual modules 1 to 25 as listed below, at least some of which are demountable from an apertured front panel 120 of a housing 110 of the apparatus 100 and mounted thereon in one generally vertical plane, such that the liquid connections required between modules can be made only at the front face 120. In practice the demountable modules have no more than two standard sizes which can, if needed, be repositioned on the panel 120 to suit a different procedure. Each module has a serial bus communication connection and power connection so that its physical position is immaterial to a controller for example located in the housing 110, or located remotely. Thereby, the modules can be regarded as modular and thereby repositionable and/or interchangeable.

The chromatography apparatus shown in Figure 1 has the following module modules:
1 Control panel
2 pH monitor
3 Outlet valve 1-3, port 1 can be used for waste
4 Outlet valve 4-6
5 Conductivity monitor
6 Outlet valve 7-9
7 Pre-column Conductivity monitor
8 Column valve, including pre- and post-column pressure sensor
9 Bottles for pump rinsing solution
10 Inlet valve A1-A3
11 Inlet valve A4-A6
12 Inlet valve B1-B3
13 Inlet valve B4-B6
14 Fixed rubber feet
15 Adjustable feet
16 System pump A
17 System pump B
18 Flow restrictor, including system pressure monitor
19 Mixer module
20 Mixer valve
21 Air trap valve, including air sensor
22 Air trap
23 ON/OFF button
24 Holder for in-line filter (typical filter capsule shown)
25 UV monitor

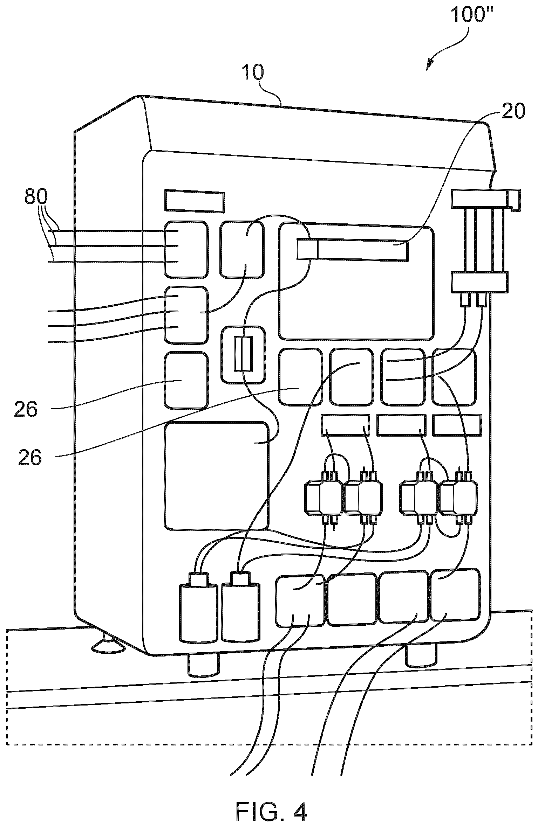

Modules can be omitted or repositioned as explained above. It will be apparent that some modules can be replaced with other modules or the space left by an omitted module can be filled with a blanking plate (see e.g. 26 Fig 4). More than one of the same numbered modules can be used where necessary.

Fluid interconnections between the fluid manipulating modules of the apparatus i.e. all the modules listed above except modules 1,15 and 23, and external modules for example sample input reservoirs, buffer fluid reservoirs, chromatograph column(s) and fraction collection equipment, all not shown in Figure 1, are made via fluid conduits in this case in the form of flexible plastics tubing, which can be readily coupled and uncoupled to corresponding ports of the fluid manipulating modules, in any desired configuration, for example using a coupling as disclosed in a related application GB 1710279 filed 28th June 2017.

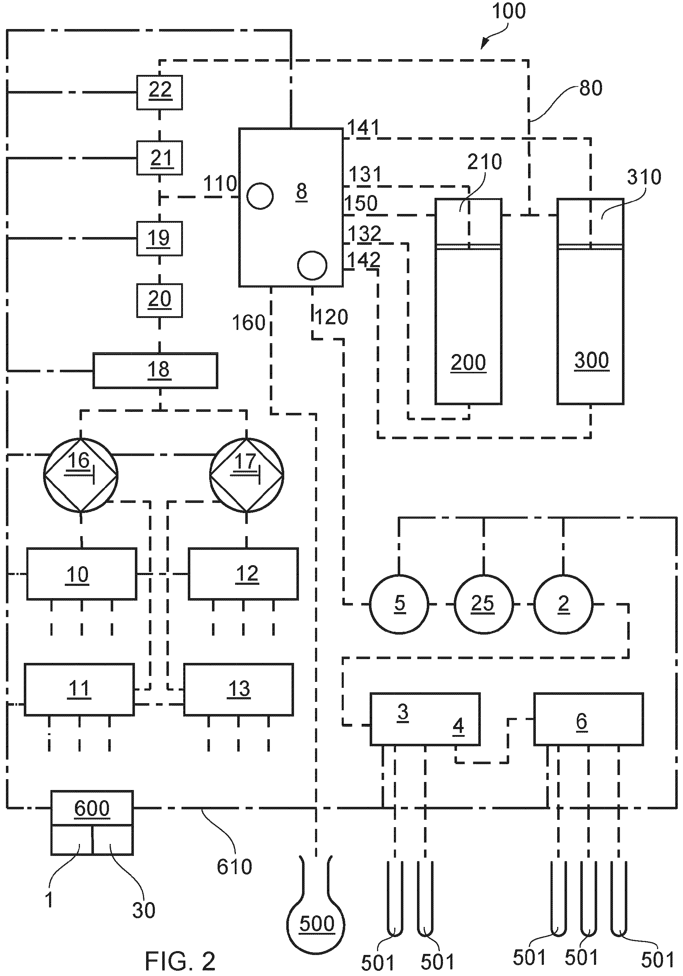

Figure 2 shows one possible liquid interconnection configuration between the main modular modules of the chromatography apparatus, connected in this case to two chromatography columns 200 and 300, although the apparatus allows any workable interconnection between modules and additional parts such as multiple columns, and liquid reservoirs. Reconfigurable liquid interconnections are denoted by short chain dotted lines 80.

At the heart of the apparatus 100 is the column valve 8, which in this case has a construction as disclosed in our co-pending patent application filed on the same day as this application, and having the title 'VALVE UNIT FOR A CHROMATOGRAPHY APPARATUS.

The value unit 8 provides multiple switching of flow for allowing flow in one or both columns 200/300 in either direction (up or down in the drawing). The user can select upflow or downflow, or select to bypass one or both columns. The flow can be directed to waste or to the next component in the flow path. The columns can also be connected in series. The Column valve includes pre-column and post-column pressure sensors. In addition the valve has a port 150 which can be used to change the volume of hydraulic cylinders 210 are 310 which are part of the columns 200 and 300, for example to provide compression of the columns' contents, also known as column packing. That packing procedure can be automated. With such a system column diameters of between about 25 and 250 mm have been found to be packable in this way. The columns can be prepacked, but rinsed and re-consolidated with the aid of pressure sensors in the value unit 8 measuring back-pressure resulting from pressure within the columns and in accordance with to known protocols, for example as described in WO2007045491.

The remaining system 100 comprises:
Inlet valve groups A and B, 10,11,12 and 13, suitable for providing selectable liquids including sample containing liquids buffer solutions, and cleansing fluids;
The inlet valves supply two system pumps, here each having a pair of pistons and associated one-way valves, providing a variable flow rate of between 0-600 ml per minute each (1200ml/min max), with a high volume and resolution of flow, enabling accurate flow rates to be maintained. Such accuracy enables good repeatability of results for a wide range of column diameters;
The pumps supply, in series a flow restrictor 18, which includes a system pressure monitor, a mixer valve 20, and a mixer module 19, before pumped liquid is diverted to the column valve unit 8;
Any entrained air can escape via an air trap valve 21, and an air trap vent 22, which vent also has an air escape from the columns 200 and 300. The air trap may be constructed in accordance with pending application GB1713993.
Once liquids reach the column valve unit they can be routed in accordance with the arrangement described in said co-pending application with the title 'VALVE UNIT FOR A CHROMATOGRAPHY APPARATUS', and thereby numerous modes of chromatography can be performed, from simple batch work, where a straightforward chromatographic separation process is performed using just one column, to procedures which more closely copy larger scale commercial procedures where two or more columns can be employed, one being readied for use while the other is being used for separation. The valve port numbering used is the same as that used in said co-pending application and here has the same arrangement;
Output from the chromatography column(s) is passed out through port 120 to: a conductivity monitor 5, a UV light absorption monitor 25, and a pH monitor 2, and is thence directed into an appropriate storage vessel in dependence on the signals from the three monitors, and thereby, separated fractions are collected in an appropriate vessel 501. Column washings can be collected in a waste vessel 500;
The long chain dotted lines in Figure 2 represent a system bus 500 which carries signals and power to and from the modules mentioned above, to and from a controller 600. It will be appreciated that controlling and monitoring signals may be transmitted wirelessly according to known protocols, doing away with the need for a communication bus. The chromatography system 100 includes also a display screen 30. Software running on the controller will display plural icons on the screen 30 and allow user manipulation of the icon on the screen to drag and drop the icons to form a series of icons representative of a user defined chromatography control method, for ease of use.

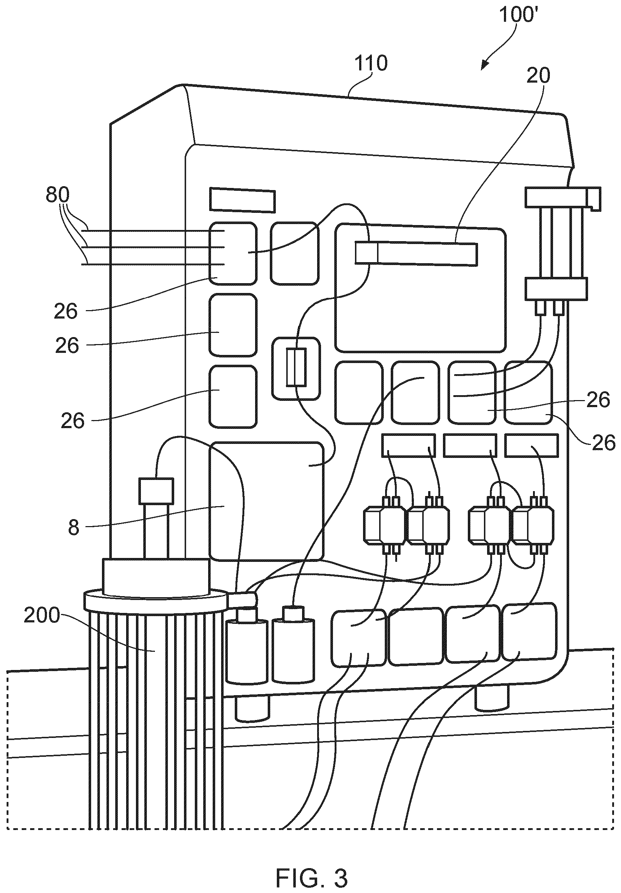

Figures 3,4 and 5 show the system connected with tubing for various configurations, where only some of the modules referenced in Figure 1 remain in place in these figures, and the apertures left by removed modules are blanked off with blanking plates 26, screwed into place over the aperture to prevent accidental liquid ingress into the housing 110.

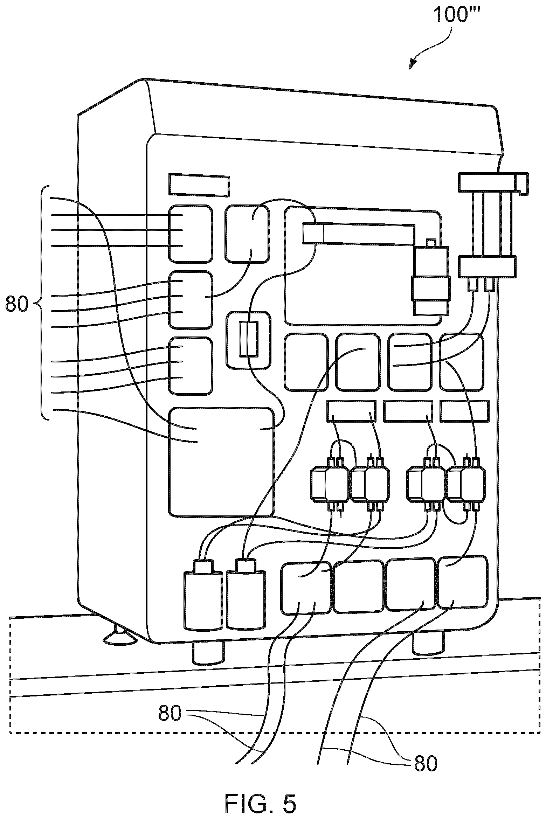

In Figure 3 a system 100' with a configuration of modules suitable for regulated environments where systems are custom-built in a factory. The system is delivered mounted, calibrated, and performance tested and suitable for work in GMP environments. Figure 4 shows one system with some modules removed, and Figure 5 shows a system 100‴ with more modules in place, similar to Figure 1, and showing typical tubular interconnections 80.

In use, modules are easily removed or added to the system and installation finalized through a one-click activation in software which can recognize each module. The software can provide comprehensive and customizable operational control as well as pre-emptive maintenance. In addition to the modules described above, input-output communication modules can be used to interface with analog and/or digital external sensors or other equipment such as automatic fraction collecting devices. The wide flow rate and pressure ranges enables more than 40-fold scaling in the range 25 to 250 mm internal diameter columns. This wide range makes the apparatus suitable to bridge the transition into GMP environments.

The packing (and re-packing) of chromatography columns, using the system described above is controllable fully by the controller 600 initiated by the control panel 1. The controller 600 is able to drive the a display screen 30 (Fig 2) to aid visualisation of the packing process and progress. The control software includes an accessible column packing record. Columns packing records can therefore be defined, created, and updated from the software for traceability and quality assurance purposes. In addition, the record can be used to monitor column performance and provide statistics for usage, separation performance, and packing intervals.

The display screen can provide a process visualization which quickly gives an operator an overview of the system's function, progress through operational steps and alarms, only providing the desired amount of information at each step. The active flow path is always displayed in the process visualisation to minimize user errors. Real time changes can be made by selecting the appropriate process on the visualization screen, e.g. selecting or dragging icons on the screen. Control, graphical interfaces are provided for specific sections, such as the column valve 8.

Preprogrammed steps are employed but these can be modified and saved as user-defined steps for added customization.

The system described and illustrated above is designed for sanitary environments. For example, the system chassis 110 is flat or curved without joints, gaps or significant concavities, other than at the edges of the faces, which makes it easy to wipe down and reduces the chance of dust and liquid trapping. The pH monitor 2 has in-line calibration and the column valve 8 provides in-process column packing, so a closed flow path through operations can be employed, meaning that no breaks in the fluid path need be made throughout one or more chromatography column packing/regeneration stages and throughout the separation operation,

## Claims

1. A chromatography system (100) comprising:
a plurality of modules (1...25) including at least one pump (16,17) and a column valve unit (8), wherein the column valve unit (8), being provided with multiple ports (131,132, 141,142), is configured to be connectable to plural chromatography columns; and
a controller (600), the controller being operable to control the at least one pump and the column valve unit to perform different chromatographic processes, including chromatographic separation process employing one column, as well as continuous chromatography employing two or more columns by selective valve opening in said column valve unit,
wherein a further port (150) is provided in the column valve unit (8) and is configured, under control of the controller, to change the volume of hydraulic cylinders (210,310) of the plural chromatography columns, thus to perform column packing without the need to reconfigure fluid conduits of the chromatography system.

2. The chromatography system (100) according claim 1, wherein said selective valve opening allows a reversal of flow directions in use in one or more of said plural chromatography columns.

3. The chromatography system (100) according to claim 1 or claim 2, wherein the controller is operable to control said modules according to software, and a display screen, said software being suitable to display plural icons on said screen and allowing user manipulation of the icon on the screen to drag and drop the icons to form a series of icons representative of a user defined chromatography control method.

4. The chromatography system according to any of claims 1-2, further comprising plural chromatography columns, each column including a chamber of changeable volume for housing chromatographic separation media and an adapter moveable to increase or decrease each said volume, and wherein the column valve unit is in fluid communication with each said adapter and is selectively operable to move independently or collectively each said adapter by means of fluid pressure changes to consequently change each said volume and in use to cause compression or relief from compression of media within each said column volume.

5. The chromatography system (100) according to any of claims 1-2, wherein the plurality of modules (1-25) are interchangeably mountable in apertures of one generally vertical face of the system housing, the modules being adapted for selective fluidic interconnection by tubing substantially, at least one of said modules including the column valve unit.

6. The chromatography system (100) according to any of claims 1-2, further comprising:
a system housing (110);
wherein the plurality of modules (1-25) are interchangeably mountable in apertures of one generally vertical face of the system housing, the modules being adapted for selective fluidic interconnection by tubing substantially at said one generally vertical face such that in use the modules and tubing occupy a generally vertically extending volume to minimize the footprint of the system.

7. The chromatography system according to claim 6, wherein the modules comprise one or more of: a pH monitor; an outlet valve; a conductivity monitor; a column valve; an inlet valve; a system liquid pump; a flow restrictor; a mixer an air trap; and a UV monitor.

8. The chromatography system according to claim 1, wherein the system includes two liquid pumps, one of said pumps being selectively operable alone or both pumps being selectively operable together, thereby to provide a range of fluid flow which is suitable for more than one mode of chromatography process.

9. The chromatography system according to any of claims 1-3, wherein said continuous chromatography process includes control of the at least one pump and the column valve unit which is switched by said software to provide fluid flow from the pump in both directions in each of the columns employed.

10. The chromatography system according to claim 1 or 2, further comprising an air trap valve (21) for removing air from a fluid and an air trap vent (22) for removing air from the plural chromatography columns.

## Patentansprüche

1. Chromatografiesystem (100) umfassend:
eine Vielzahl von Modulen (1...25), die mindestens eine Pumpe (16,17) und eine Säulenventileinheit (8) einschließen, wobei die Säulenventileinheit (8), die mit mehreren Anschlüssen (131,132,141,142) bereitgestellt ist, so ausgebildet ist, dass sie an mehrere Chromatographiesäulen angeschlossen werden kann; und
eine Steuereinheit (600), wobei die Steuereinheit betriebsfähig ist, um die mindestens eine Pumpe und die Säulenventileinheit so zu steuern, dass sie verschiedene chromatographische Prozesse durchführen, die chromatographische Trennprozesse einschließen, bei denen eine Säule verwendet wird, sowie kontinuierliche Chromatographie, bei der durch wahlweises Öffnen des Ventils in der Säulenventileinheit zwei oder mehr Säulen verwendet werden,
wobei ein weiterer Anschluss (150) in der Säulenventileinheit (8) bereitgestellt ist und so ausgebildet ist, dass er unter Steuerung der Steuereinheit das Volumen von hydraulischen Zylindern (210,310) der mehreren Chromatographiesäulen ändert und so Säulenpackung durchführt, ohne Notwendigkeit, Fluidleitungen des Chromatographiesystems neu zu konfigurieren.

2. Chromatographiesystem (100) nach Anspruch 1, wobei das wahlweise Öffnen des Ventils in Verwendung eine Umkehrung von Strömungsrichtungen in einer oder mehreren der mehreren Chromatographiesäulen ermöglicht.

3. Chromatographiesystem (100) nach Anspruch 1 oder Anspruch 2, wobei die Steuereinheit betriebsfähig ist, um die Module gemäß Software und einem Anzeigebildschirm zu steuern, wobei die Software geeignet ist, um mehrere Symbole auf dem Bildschirm anzuzeigen und Benutzermanipulation des Symbols auf dem Bildschirm zu ermöglichen, um die Symbole von einer Reihe von Symbolen, die für ein benutzerdefiniertes Chromatographiesteuerverfahren repräsentativ sind, zu ziehen und abzulegen.

4. Chromatographiesystem nach einem der Ansprüche 1-2, weiter umfassend mehrere Chromatographiesäulen, wobei jede Säule eine Kammer mit veränderbarem Volumen zum Unterbringen von chromatographischen Trennmedien und einen Adapter einschließt, der bewegbar ist, um jedes Volumen zu erhöhen oder zu verringern, und wobei die Säulenventileinheit in fluidischer Kommunikation mit jedem Adapter steht und wahlweise betriebsfähig ist, um jeden Adapter unabhängig oder gemeinschaftlich mittels Fluiddruckänderungen zu bewegen, um infolgedessen jedes Volumen zu verändern und in Verwendung Kompression oder Entspannung von Kompression von Medien innerhalb von jedem Säulenvolumen zu bewirken.

5. Chromatographiesystem (100) nach einem der Ansprüche 1-2, wobei die Vielzahl von Modulen (1-25) untereinander austauschbar in Öffnungen von einer im Allgemeinen vertikalen Fläche des Systemgehäuses montiert werden können, wobei die Module angepasst sind für wahlweise fluidische gegenseitige Verbindung durch Rohre, wobei im Wesentlichen mindestens eines der Module die Säulenventileinheit einschließt.

6. Chromatographiesystem (100) nach einem der Ansprüche 1-2, weiter umfassend:
ein Systemgehäuse (110);
wobei die Vielzahl von Modulen (1-25) untereinander austauschbar in Öffnungen von einer im Allgemeinen vertikalen Fläche des Systemgehäuses montiert werden können, wobei die Module angepasst sind für wahlweise fluidische gegenseitige Verbindung im Wesentlichen an der einen im Allgemeinen vertikalen Fläche derart, dass in Verwendung die Module und Rohe ein sich vertikal erstreckendes Volumen belegen, um den Fußabdruck des Systems zu minimieren.

7. Chromatographiesystem nach Anspruch 6, wobei die Module eines oder mehreres umfassen von Folgendem: einem pH-Monitor; einem Auslassventil; einem Leitfähigkeitsmonitor; einem Säulenventil; einem Einlassventil; einer Systemflüssigkeitspumpe; einem Durchflussbegrenzer; einem Mixer, einer Luftfalle; und einem UV-Monitor.

8. Chromatographiesystem nach Anspruch 1, wobei das zwei System zwei Flüssigkeitspumpen einschließt, wobei eine der Pumpen wahlweise alleine betriebsfähig ist oder beide Pumpen wahlweise gemeinsam betriebsfähig sind, um dadurch einen Bereich von Fluidströmung bereitzustellen, der für mehr als einen Modus des Chromatographieprozesses geeignet ist.

9. Chromatographiesystem nach einem der Ansprüche 1-3, wobei der kontinuierliche Chromatographieprozess Steuern der mindestens eine Pumpe und der Säulenventileinheit, die durch die Software geschaltet wird, einschließt, um Fluidströmung von der Pumpe in beiden Richtungen in jeder der verwendeten Säulen bereitzustellen.

10. Chromatographiesystem nach Anspruch 1 oder 2, weiter umfassend ein Luftfallenventil (21) zum Entfernen von Luft aus einem Fluid und ein Luftfallenventil (22) zum Entfernen von Luft aus den mehreren Chromatographiesäulen.

## Revendications

1. Système de chromatographie (100) comprenant :
une pluralité de modules (1... 25) incluant au moins une pompe (16, 17) et une unité (8) de vanne de colonne, dans lesquels l'unité (8) de vanne de colonne, étant munie de plusieurs orifices (131, 132, 141, 142), est configurée pour être reliée à plusieurs colonnes de chromatographie ; et un dispositif de commande (600), le dispositif de commande étant actionnable pour commander l'au moins une pompe et l'unité de vanne de colonne afin de réaliser différents procédés chromatographiques, incluant un procédé de séparation chromatographique employant une colonne, ainsi qu'une chromatographie continue employant deux colonnes ou plus par ouverture sélective de vanne dans ladite unité de vanne de colonne,
dans lequel un orifice supplémentaire (150) est fourni dans l'unité (8) de vanne de colonne et est configuré, sous commande du dispositif de commande, pour modifier le volume de vérins hydrauliques (210, 310) des plusieurs colonnes de chromatographie, pour ainsi réaliser un remplissage de colonne sans la nécessité de reconfigurer des conduits fluidiques du système de chromatographie.

2. Système de chromatographie (100) selon la revendication 1, dans lequel ladite ouverture sélective de vanne permet une inversion de directions d'écoulement en utilisation dans une ou plusieurs desdites plusieurs colonnes de chromatographie.

3. Système de chromatographie (100) selon la revendication 1 ou la revendication 2, dans lequel le dispositif de commande est actionnable pour commander lesdits modules selon un logiciel, et un écran d'affichage, ledit logiciel étant apte à afficher plusieurs icônes sur ledit écran et permettant une manipulation par l'utilisateur de l'icône sur l'écran pour glisser-déposer les icônes afin de former une série d'icônes représentative d'un procédé de commande de chromatographie défini par l'utilisateur.

4. Système de chromatographie selon l'une quelconque des revendications 1 à 2, comprenant en outre plusieurs colonnes de chromatographie, chaque colonne incluant une chambre de volume variable pour loger des milieux de séparation chromatographique et un adaptateur mobile pour augmenter ou diminuer chacun desdits volumes, et dans lequel l'unité de vanne de colonne est en communication fluidique avec chacun desdits adaptateurs et est sélectivement actionnable pour déplacer indépendamment ou collectivement chacun desdits adaptateurs au moyen de changements de pression fluidique pour, en conséquence, modifier chacun desdits volumes et en utilisation provoquer une compression ou un relâchement de compression de milieux à l'intérieur de chacun desdits volumes de colonne.

5. Système de chromatographie (100) selon l'une quelconque des revendications 1 à 2, dans lequel la pluralité de modules (1-25) peuvent être montés de manière interchangeable dans des ouvertures d'une face généralement verticale du boîtier du système, les modules étant adaptés pour une interconnexion fluidique sélective en raccordant par tube substantiellement au moins un desdits modules, incluant l'unité de vanne de colonne.

6. Système de chromatographie (100) selon l'une quelconque des revendications 1 à 2, comprenant en outre :
un boîtier de système (110) ;
dans lequel la pluralité de modules (1-25) peuvent être montés de manière interchangeable dans des ouvertures d'une face généralement verticale du boîtier du système, les modules étant adaptés pour une interconnexion fluidique sélective par raccordement par tube substantiellement au niveau de ladite face généralement verticale de telle sorte qu'en utilisation les modules et la tuyauterie occupent un volume s'étendant généralement verticalement afin de minimiser l'encombrement du système.

7. Système de chromatographie selon la revendication 6, dans lequel les modules comprennent un ou plusieurs parmi : un moniteur de pH ; une vanne de sortie ; un moniteur de conductivité ; une vanne de colonne ; une vanne d'entrée ; une pompe de liquide de système ; un limiteur de débit ; un mélangeur ; un piège à air ; et un moniteur UV.

8. Système de chromatographie selon la revendication 1, dans lequel le système inclut deux pompes à liquide, l'une desdites pompes étant sélectivement actionnable seule ou les deux pompes étant sélectivement actionnables ensemble, pour fournir ainsi une plage d'écoulement de fluide qui est appropriée pour plus d'un mode de processus chromatographique.

9. Système de chromatographie selon l'une quelconque des revendications 1 à 3, dans lequel ledit processus de chromatographie continu inclut la commande de l'au moins une pompe et de l'unité de vanne de colonne, laquelle est commutée par ledit logiciel de manière à fournir un écoulement de fluide depuis la pompe dans les deux directions dans chacune des colonnes employées.

10. Système de chromatographie selon la revendication 1 ou la revendication 2, comprenant en outre une vanne (21) de piège à air pour éliminer l'air d'un fluide et un évent (22) de piège à air pour éliminer l'air des plusieurs colonnes de chromatographie.
